Europäisches Patentamt

European Patent Office

Office européen des brevets

(19)

(11) **EP 0 549 417 B1**

(12) **FASCICULE DE BREVET EUROPEEN**

(45) Date de publication et mention de la délivrance du brevet:
**01.05.1996  Bulletin 1996/18**

(51) Int Cl.⁶: **G01S 17/50**, G01P 5/00

(21) Numéro de dépôt: **92403430.9**

(22) Date de dépôt: **16.12.1992**

(54) **Procédé et dispositif pour l'automatisation des vélocimètres laser à effet dopler fonctionnant en diffusion avant**

**Verfahren und Anordnung zur Automatisierung von Laser-Dopplergeschwindigkeitsmessern mit vorwärts gerichteter Lichtstreuung**

Method and device of automation of laser doppler velocimeters with forward light scattering

(84) Etats contractants désignés:
**DE DK GB**

(30) Priorité: **26.12.1991  FR 9116183**

(43) Date de publication de la demande:
**30.06.1993  Bulletin 1993/26**

(73) Titulaire: **ETAT FRANCAIS**
**Représenté par le délégué général pour l'armement**
**F-00460 Armées (FR)**

(72) Inventeurs:
• **Frechou, Didier**
  **F-27000 Evreux (FR)**
• **Lecoffre, Yves**
  **F-38000 Grenoble (FR)**

(56) Documents cités:
**EP-A- 0 458 276          DE-A- 3 125 685**
**FR-A- 2 670 293          GB-A- 2 010 629**
**US-A- 4 148 585          US-A- 4 632 548**
**US-A- 4 995 102**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention est relative à l'anémométrie, c'est-à-dire à la mesure de la vitesse locale en un grand nombre de points d'un écoulement fluide, notamment gazeux, au moyen d'un vélocimètre laser à effet Doppler .

Les dispositifs d'anémométrie laser à effet Doppler actuels comportent une tête émettrice apte à émettre deux faisceaux laser de couleurs différentes qui se croisent au point de mesure de la vitesse locale de l'écoulement fluide et une tête réceptrice comportant un photodétecteur, tel qu'un photomultiplicateur , qui observe le point de mesure .

Il existe deux types de vélocimètres laser à effet Doppler:

- ceux fonctionnant dans le mode de diffusion arrière ou rétrodiffusion, dans lesquels la tête émettrice et la tête réceptrice sont disposées du même côté du volume de mesure de la vitesse d'écoulement , les deux têtes étant en fait groupées en une seule unité qui comporte une partie émission et une partie réception ; et
- ceux fonctionnant en mode de diffusion avant dans lesquels la tête réceptrice comportant le photodétecteur est positionnée dans la direction opposée à celle de la tête émettrice par rapport au volume de mesure .

Les vélocimètres fonctionnant en mode de diffusion arrière présentent l'avantage d'assurer aisément , notamment dans le cas où la partie émission et la partie réception sont dans une même unité , le synchronisme du déplacement du dispositif d'émission et du dispositif de réception , ce qui permet d'assurer que le photodétecteur du dispositif de réception vise bien le point où se croisent les deux faisceaux laser du dispositif d'émission .

Par contre, un tel vélocimètre présente des inconvénients du fait qu'à moins d'utiliser de très fortes puissances de la source laser ou d'ensemencer l'écoulement avec des particules nombreuses, ce qui n'est pas toujours possible , on obtient une information incomplète .

Quant aux vélocimètres fonctionnant en mode de diffusion avant , ils présentent l'avantage de permettre une collection de la lumière diffusée par le point de mesure bien plus élevé que le mode de diffusion arrière .

Par contre , ils posent le problème très difficile du déplacement synchrone entre le dispositif d'émission des deux faisceaux laser et le dispositif de réception à photodétecteur.

Actuellement , les vélocimètres laser à effet Dopler fonctionnant suivant le mode de diffusion avant comportent une table pour le dispositif d'émission qui porte une ou deux têtes optiques d'émission émettant deux faisceaux laser , les lasers eux-mêmes pouvant se trouver à distance en position fixe et alimenter la ou les têtes optiques par fibres optiques, et une table portant la tête réceptrice à photodétecteur , ces deux tables étant disposées de part et d'autre du volume de mesure, en fait de part et d'autre de deux fenêtres optiques opposées prévues dans un conduit dans lequel se produit l'écoulement du fluide à observer .

Pour assurer le déplacement synchrone des deux tables , on prévoit à l'heure actuelle généralement une potence , en forme de U renversé, très rigide pour garantir une grande précision du synchronisme de déplacement,ce qui assure un déplacement simultané des deux tables , à savoir celle portant les têtes optiques et celle portant le photodétecteur .

Une telle disposition présente l'inconvénient d'être lourde et très onéreuse lorsqu'on veut une précision très grande .

L'invention vise à réaliser l'automatisation du déplacement de la tête réceptrice afin que le ou les photodétecteurs de celle-ci visent exactement le point de mesure où se croisent les faisceaux laser des deux têtes optiques du dispositif émetteur de faisceaux laser lorsque la table qui porte ces têtes se déplace afin de déplacer le point de mesure .

Un tel système automatique permet de réaliser des mesures de vitesse de l'écoulement d'un fluide, même lorsqu'il est impossible d'assurer l'ensemencement de l'écoulement avec des particules à grand pouvoir de diffusion , notamment afin d'éviter de polluer l'écoulement , l'écoulement lui-même ne comportant que très peu de particules, même de petites dimensions , et de vérifier ces mesures , même dans des veines d'essais de dimensions importantes , par exemple supérieures à un mètre de côté en section et lorsqu'on désire effectuer la mesure de vitesse en un grand nombre de points , par exemple de l'ordre de 1000 points .

Avec le dispositif non automatique , et en l'absence d'une potence du type précité , le réglage de la mise au point peut nécessiter pour chaque point au moins cinq minutes , sinon davantage .

La présente invention vise à pallier les inconvénients précités et elle consiste à cet effet à prévoir :

- d'une part , un procédé caractérisé en ce qu'il consiste : à utiliser un taux de comptage dit réduit N*, qui est défini comme le quotient de la fréquence N d'acquisition des informations issues des particules passant dans un volume de mesure et dont la vitesse a été validée et de la moyenne U des vitesses absolues $|U_i|$ des particules enregistrées pendant la mesure en un point et qui est définie par la formule

$$ \overline{U} = \frac{1}{m} \sum_{i=1}^{i=m} \left| U_1 \right| \qquad (1) $$

i étant un paramètre courant de l à m ; à déterminer préalablement une valeur théorique du taux de comptage réduit maximal lorsque le photodétecteur de la tête du dispositif récepteur est correctement focalisé sur le point de mesure ; et à effectuer successivement deux phases ou séquences de focalisation du dispositif récepteur sur le point de mesure, à savoir :

a) une phase de focalisation automatique partielle, qui consiste à déplacer le photodétecteur par l'intermédiaire de sa table de déplacement suivant une spirale à sections rectilignes successives à angle droit qui va en se dilatant à partir du point de départ , les déplacements successifs du photodétecteur s'effectuant suivant un premier pas constant jusqu'à ce que le taux de comptage réduit calculé soit différent de O , et

b) une phase ou séquence de focalisation finale , qui suit la phase précédente et qui est effectuée suivant une spirale analogue , avec un second pas différent du premier et qui est égal à une fraction du diamètre du volume de mesure, le déplacement du photodétecteur étant arrêté dès que le taux de comptage réduit calculé est supérieur à 50% , ou plus , du taux de comptage réduit maximal déterminé préalablement ;

- d'autre part , un dispositif pour la mise en oeuvre du procédé susvisé , qui comporte un dispositif d'émission de faisceaux laser porté par une première table déplaçable pour permettre de faire varier le point de mesure dans le volume de mesure , un dispositif récepteur comportant au moins un photodétecteur porté par une seconde table déplaçable, des moyens pour déplacer la première table afin de déplacer le point de mesure et des moyens pour déplacer la deuxième table en synchronisme avec la première table , caractérisé par le fait que ces derniers moyens sont constitués par des moyens pour déterminer le taux dudit comptage réduit , des moyens pour assurer le déplacement de la deuxième table suivant la première et la seconde spirale à sections rectilignes successives à angle droit qui s'élargit progressivement , les premier et second pas de déplacement étant constants , le déplacement suivant la première spirale étant réalisé suivant le premier pas jusqu'à l'obtention d'un taux de comptage réduit différent de zéro, tandis que le déplacement suivant la seconde spirale est réalisé jusqu'à un taux de comptage réduit mesuré est supérieur à 50% , ou plus , du taux de comptage réduit maximal déterminé préalablement pour pouvoir permettre des mesurés satisfaisantes .

On va décrire maintenant avec référence aux dessins annexés un mode de réalisation préféré du procédé et dispositif selon l'invention .

Sur les dessins :

La figure l illustre schématiquement un vélocimètre laser à effet Dopler comportant , de part et d'autre d'un conduit pour un fluide dont on veut déterminer la vitesse d'écoulement, un dispositif d'émission à deux faisceaux laser et un dispositif de réception à photodétecteur , du type photomultiplicateur ;

La figure 2 illustre le cheminement des champs de mesure par rapport au volume dans lequel la mesure doit être effectivement réalisée , au cours de la première phase de recherche en spirale ;

La figure 3 représente le champ vu par le photodétecteur à la fin de cette première phase par rapport au volume de mesure;

La figure 4, enfin, illustre le taux de comptage réduit en fonction de la distance r séparant les centres du champ vu par le photodétecteur, d'une part, et le volume de mesure, d'autre part .

En se référant tout d'abord à la figure l , on voit que le dispositif de vélocimétrie laser à effet Dopler comprend , de part et d'autre d'un conduit l dans lequel se déplace dans le sens de la flèche F un fluide , notamment un gaz, dont on veut mesurer en plusieurs points la vitesse des particules :

- d'une part , un dispositif d'émission 2 porté par une table ( non représentée) déplaçable dans les trois directions comme illustrè par le trièdre trirectangle 3, le dispositif d'émission 2 émettant au moins un premier faisceau laser 4 d'une première couleur, par exemple bleue ,et au moins un second faisceau laser 5 d'une deuxième couleur , par exemple verte , ces deux faisceaux 4 et 5 se croisant à l'intérieur d'une zone de mesure 6 ; et

- d'autre part un dispositif récepteur 7 porté par une deuxième table (non représentée ) pouvant être déplacée dans les trois directions comme représenté par un trièdre trirectangle 8 , le dispositif 7 comportant un photodétecteur, notamment un photomultiplicateur , qui observe la zone de mesure 6 . Celle-ci a été agrandie en 6a où l'on voit, d'une part , le volume de mesure 9 et , d'autre part, le champ l0 observé par le photodétecteur du dispositif 7. Il s'agit d'assurer le synchronisme du déplacement du dispositif émetteur 2 et du dispositif récepteur 7 afin que le photodétecteur du dispositif 7 observe le point de rencontre 6b des deux faisceaux 4 et 5 envoyés par le dispositif émetteur 2.

L'invention est basée sur un déplacement du photomultiplicateur du dispositif récepteur 7 suivant deux phases ou séquences successives , à savoir : une phase préliminaire qui consiste à déplacer la table du dispositif récepteur 7 suivant une spirale à sections droites successives à angle droit qui se dilate , les déplacements étant à pas constant et ceci jusqu'à ce que le photodétecteur du dispositif 7 reçoive des informations validées portant sur la vitesse de particules passant au point d'intersection 6b des faisceaux 4 et 5 ;

- puis , à partir de ce moment , une deuxième phase de déplacement de la table du photodétecteur , celle-ci consistant également en un déplacement suivant une spirale à sections rectilignes successives à angle droit qui se dilate jusqu'à l'obtention d'une valeur du taux de comptage réduit qui s'approche de la valeur maximale de ce taux de comptage réduit .

Le dispositif calculateur associé à la sortie du photomultiplicateur 7 détermine , pour chaque position d'arrêt du dispositif récepteur 7 , le taux de comptage réduit, qui est nul lorsque le photodétecteur du dispositif 7 ne vise pas, dans la zone de mesure 6 , le volume de mesure 9, mais qui a une valeur non nulle lorsque le champ 10 vu par le photodétecteur du dispositif 7 chevauche au moins partiellement le volume de mesure 9 , le taux de comptage réduit étant maximal lorsque la totalité du volume de mesure 9 est couverte par le champ 10 vu par le photodétecteur du dispositif 7 .

La recherche de la position du photodétecteur du dispositif 7 afin d'optimiser sa position s'opère dans un plan perpendiculaire à l'axe optique 7a du photodétecteur .

Plus précisément , le taux de comptage réduit $N^*$ est défini par la formule :

$$N^* = N/U$$

formule dans laquelle N est la fréquence d'acquisition des informations issues des particules passant dans le volume de mesure 9 et dont la vitesse a été validée et U est la moyenne des vitesses absolues des particules enregistrées pendant la mesure en un point donnée par la formule (1) .

Le taux de comptage réduit est calculé uniquement sur une composante de la vitesse dans une direction donnée . Il est intéressant de choisir la composante de la vitesse qui est proche du vecteur vitesse de l'écoulement en ce point .

En ce qui concerne le taux de comptage réduit , on peut noter que la définition de celui-ci est basée sur la moyenne des vitesses absolues de chaque particule , pour s'assurer que le comptage est indépendant du sens de passage de la particule visée dans le volume de mesure ; plus particulièrement , dans une zone d'écoulement dans laquelle la vitesse moyenne serait nulle, mais dans laquelle les fluctuations de vitesse changeraient de signe , la définition du taux de comptage réduit donnée précédemment ne rend compte que de la fréquence des passages de particules dans le volume de mesure, quels que soient leur direction et leur sens .

Lorsque le photodétecteur du dispositif récepteur 7 est correctement focalisé sur le volume de mesure , le taux de comptage réduit est maximal . En appelant $N_m^*$ le taux de comptage réduit mesuré au cours des déplacements de la table supportant le dispositif de réception 7, on voit que celui-ci croît au fur et à mesure que le champ 9 vu par le photodétecteur chevauche de plus en plus le volume de mesure 10 et il atteint justement la valeur maximale $N_M^*$ lorsque, comme indiqué ci-dessus, le champ 9 recouvre le volume l0

En fait, $N_M^*$ représente le produit de la section du volume de mesure A par la concentration moyenne C des particules dans l'écoulement :

$$N_M^* = CA$$

cette définition étant correcte dans les hypothèses suivantes:

- le photodétecteur du dispositif récepteur 7 est correctement focalisé sur le volume de mesure au point de croisement des faisceaux , c'est-à-dire lorsque $N^*$ est égal à $N_M^*$ ,
- la concentration en particules ne varie pas dans l'espace correspondant à la zone explorée de l'écoulement , et
- la puissance lumineuse des faisceaux laser reste constante pendant la mesure .

Le procédé selon l'invention pour réaliser l'automatisation du déplacement du dispositif 7 comporte une phase ou séquence préalable et deux phases ou séquences successives opérationnelles..

La phase ou séquence préalable consiste à initialiser les paramètres .

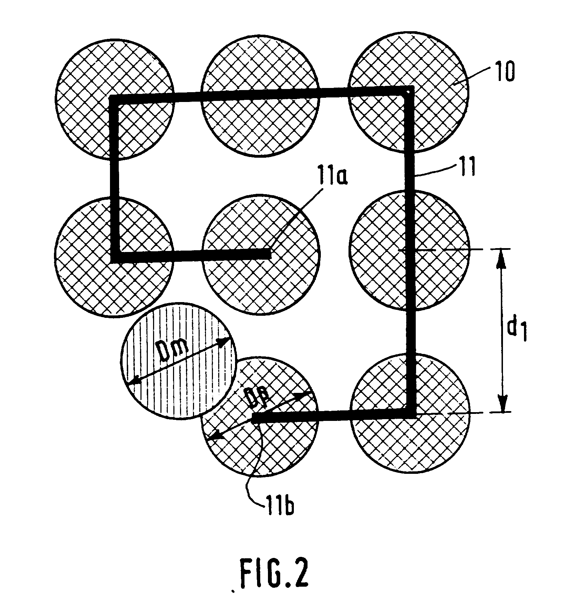

L'opérateur ajuste tout d'abord la position du photodétecteur du dispositif récepteur 7 sur le volume de mesure , c'est-à-dire sur le point de croisement 6b des faisceaux. La recherche dû taux de comptage réduit maximal est effectuée automatiquement , le photodétecteur décrivant, par la mise en mouvement de la table de déplacement du dispositif récepteur 7, une spirale du type illustré en 11 sur la figure 2 , c'est-à-dire une spirale à sections rectilignes successives à angle droit à partir d'un point de départ 11a et s'élargissant jusqu'à un point d'arrivée 11b. Cette spirale est décrite avec un pas très petit étant donné que, contrairement à ce qui est illustré sur la figure 2 , dès le départ au point 11a le photodétecteur est déjà ajusté sur le point de croisement des faisceaux .

Le pas dans cette séquence préliminaire d'initialisation des paramètres est égal à

$$d_o = x_o \, D_m \, ,$$

formule dans laquelle Dm est le diamètre du volume de mesure au point de croisement des faisceaux laser en 6d , tandis que $x_o$ est un coefficient numérique, fixé par exemple à 20%.

A chaque pas de la spirale , le taux de comptage réduit est enregistré . A la fin de la spirale le photodétecteur du dispositif 7 est positionné au point de la spirale qui possède le taux de comptage réduit maximal , à savoir $N_M^*$ . Dès lors , on peut procéder au fonctionnement opérationnel à deux séquences successives .

La séquence ou phase n°1 de focalisation automatique partielle sur le point courant du volume de mesure est illustrée sur la figure 2 , en supposant qu'initialement aucune information de vitesse ne soit validée et que l'on se trouve au point 11a de départ de la spirale 11 . La séquence n°1 commence et elle se poursuit en faisant déplacer en spirale d'un pas constant le photodétecteur du dispositif récepteur 7 par l'intermédiaire de sa table de déplacement . La spirale 11, comporte des parcours rectilignes successifs rectilignes à angle droit et elle s'élargit jusqu'à ce qu'elle soit stoppée au point 11b dès que le taux de comptage réduit calculé est différent de zéro . Le pas dl de la spirale 11 dans le cas de cette séquence de focalisation automatique partielle est choisi de manière à obtenir un balayage optimal de l'espace .

Il est de la forme

$$d_1 = \frac{\sqrt{2}}{2} (x_1 + \frac{D_p}{D_m})$$

formule dans laquelle $x_1$ est un coefficient de superposition, qui a été fixé à la valeur de 20% mais bien entendu peut être quelque peu différent , $D_p$ est le diamètre de la surface vu par le photodétecteur , à savoir comme illustré sur la figure 2 , et est donc fonction de l'ouverture de champ de l'objectif monté sur le photodétecteur et du grandissement de cet objectif, et $D_m$ a la signification indiquée ci-dessus . Lorsque l'on trouve dans la position llb de la figure 2, c'est-à-dire lorsque le taux de comptage réduit mesuré n'est plus nul, la première séquence de focalisation automatique partielle est terminée et on passe à la deuxième séquence, à savoir celle de focalisation automatique finale sur le point courant .

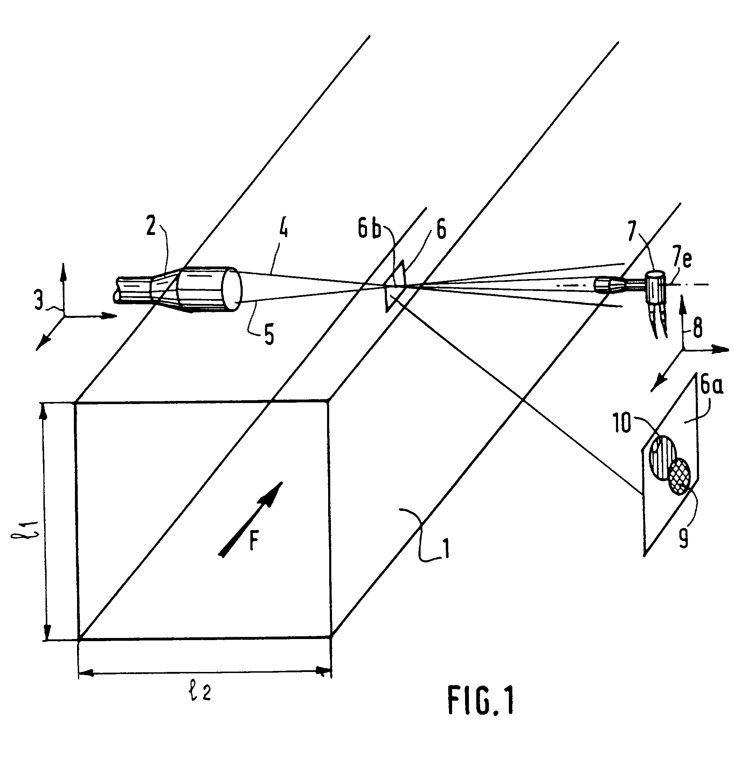

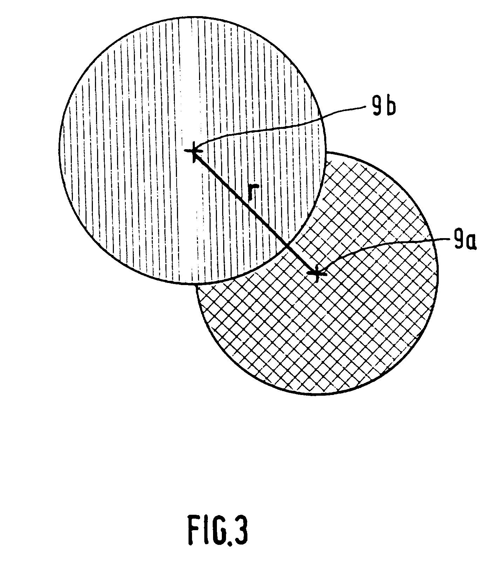

On utilise donc la position de deux champs , à savoir le champ 10 vu par le photodétecteur et le champ du volume de mesure 9 ( figures 1 et 3 ) , leurs centres, respectivement 9a et 9b , étant séparés par la distance r .

La deuxième séquence de focalisation automatique finale sur le point courant est la réplique de la séquence précédente de focalisation automatique partielle , à savoir elle est réalisée suivant une spirale à sections rectilignes à angle droit avec dilatation de la spirale , c'est-à-dire analogue à celle illustrée en 11 sur la figure 2, mais le pas de la nouvelle spirale est égal à une fraction du diamètre $D_m$ du volume de mesure au point de croisement 6b des faisceaux laser. Ce pas $d_2$ est donné par la formule :

$$d_2 = x_2 D_m$$

dans laquelle x2 est un coefficient numérique dont la valeur est égale à 20%, sur la base de tests comparatifs entre les différentes valeurs , mais peut être un peu différent de 20%, tandis que $D_m$ a la signification indiquée précédemment . Cette deuxième séquence de déplacement en spirale est arrêtée dès que le taux de comptage réduit mesuré atteint un pourcentage important du taux de comptage réduit maximal $N_M^*$ , à savoir lorsque $N^* > k \, N_M^*$ , k étant un coefficient numérique pris par exemple égal à 70%, valeur qui apparaît comme satisfaisante dans la plupart des cas , mais bien entendu on pourrait prévoir une valeur de k quelque peu différente de 70% , par exemple comprise entre 70% et 85%.

Dans certaines situations , il se peut que le procédé et le dispositif automatique selon l'invention soient incapables de focaliser correctement le photodétecteur ( en général le photomultiplicateur ) du dispositif récepteur 7 , par exemple dans les cas suivants :

- défauts de transmission optique des faisceaux laser 4 et 5 , qui rendent leur croisement impossible ,
- zone d'exploration des spirales, telles que ll, insuffisante etc..

Dans cette situation , le dispositif émet un signal, par exemple sonore ou lumineux qui attire l'attention de l'opérateur, qui effectue alors manuellement le réglage initial, puis il confie à nouveau le fonctionnement au procédé et dispositif de focalisation automatique selon l'invention et qui viennent d'être décrits en détail ci-dessus .

Le procédé et le dispositif selon l'invention a été effectivement mis en oeuvre avec un dispositif de vélocimétrie laser à effet Dopler à deux composantes "DANTEC", sur une veine d'essai de section 2m x l,35 m( $l_1$ = 2 m et $l_2$ =l,35m), qui rendait pratiquement impossible un parfait alignement des tables de déplacement et qui, avant la mise en oeuvre de l'invention, obligeait à refocaliser le photodétecteur à chaque déplacement du volume de mesure .

On a appliqué le procédé et le dispositif d'automatisation selon l'invention sur la composante des vitesses axiales de l'écoulement .

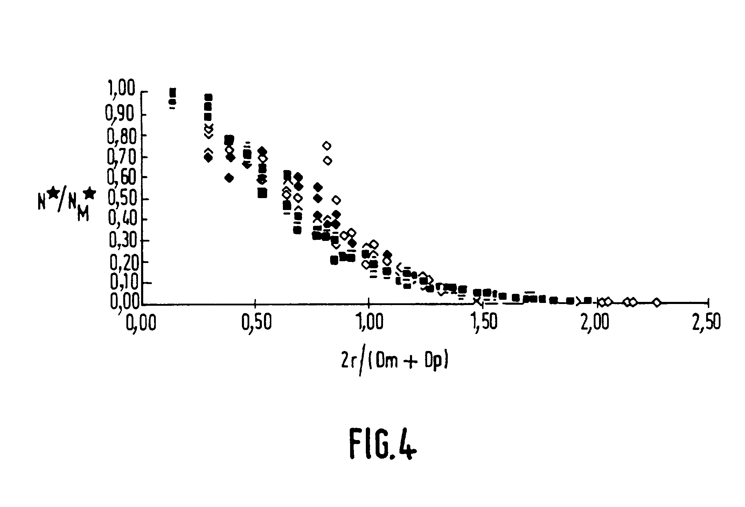

Plusieurs tests ont montré que le procédé et le dispositif d'automatisation selon l'invention étaient capables de faire retrouver par le photodétecteur le point de croisement des deux faisceaux laser en trois secondes en moyenne , alors qu'il fallait approximativement cinq minutes pour une opération manuelle . Sur la figure 4 , on a donné des résultats d'essais ainsi effectués, les valeurs de 2r/ ($D_m + D_p$) étant portées en abscisses et celles de N*/N*$_M$ en ordonnées.

Le procédé selon l'invention peut fonctionner avec un anémomètre laser à une , deux ou trois composantes .

On peut étendre l'invention au cas où le photodétecteur n'est pas situé dans l'axe optique des faisceaux laser, mais présente un angle de décalage avec ledit axe optique.

Le procédé et le dispositif selon l'invention peuvent également être utilisés dans un cadre plus général pour détecter la coïncidence des volumes de mesure avec mise en oeuvre de plusieurs couleurs , ce qui est le cas du vélocimètre laser à trois composantes avec trois couples de faisceaux de longueurs d'ondes différentes ( par exemple correspondant aux couleurs verte , bleue et violette ) . A titre d'exemple de tels dispositifs d'émission en trois couleurs , on peut citer le système " COLORBURST - Multicolor Beam Separator " TSI" ( Marque enregistrée de la Société TSI Incorporated ). Dans ce cas l'automatisation de la focalisation est effectuée successivement sur chaque volume de mesure de chaque couple de couleurs différent , ce qui permet de connaître la position respective de chaque volume de mesure.

L'invention n'est pas limitée au mode de réalisation décrit et illustré, mais elle couvre également les modifications et variantes à la portée de l'homme de l'art, la définition générale de l'invention étant donnée dans les revendications ci-après , dans lesquelles les nombres de référence ne limitent nullement la portée de l'invention et sont donnés uniquement pour faciliter la compréhension de celles-ci.

**Revendications**

1. Procédé d'automatisation des vélocimètres laser à effet Doppler du type à diffusion avant comportant un dispositif émetteur de faisceaux laser portés par une première table déplaçable et un dispositif récepteur comportant un photodétecteur porté par une seconde table déplaçable, caractérisé en ce qu'il consiste : à utiliser un taux de comptage dit réduit N* , qui est défini comme le quotient de la fréquence N d'acquisition des informations issues des particules passant dans un volume de mesure et dont la vitesse a été validée et de la moyenne U des vitesses absolues l$U_i$l des particules enregistrées pendant la mesure en un point et qui est définie par la formule :

$$U = \frac{1}{m} \sum_{i=1}^{i=m} \left| U_i \right|$$

i étant un paramètre courant de 1 à m ; à déterminer préalablement une valeur théorique du taux de comptage réduit maximal lorsque le photodétecteur de la tête du dispositif récepteur est correctement focalisé sur le point de mesure ; et à effectuer successivement deux phases ou séquences de focalisation du dispositif récepteur sur le point de mesure, à savoir :

   a) une phase de focalisation automatique partielle , qui consiste à déplacer le photodétecteur par l'intermédiaire de sa table de déplacement suivant une spirale à sections rectilignes successives à angle droit qui va en se dilatant à partir du point de départ , les déplacements successifs du photodétecteur s'effectuant suivant un premier pas constant jusqu'à ce que le taux de comptage réduit calculé soit différent de O , et
   b) une phase ou séquence de focalisation finale , qui suit la phase précédente et qui est effectuée suivant une spirale analogue, avec un second pas différent du premier et qui est égal à une fraction du diamètre du volume de mesure, le déplacement du photodétecteur étant arrêté dès que le taux de comptage réduit calculé est supérieur à 50% , ou plus, du taux de comptage réduit maximal déterminé préalablement .

2. Procédé selon la revendication 1, caractérisé en ce que la phase ou séquence de focalisation finale est arrêtée lorsque le taux de comptage réduit calculé est égal à 70 à 85% du taux de comptage réduit maximal.

3. Dispositif pour la mise en oeuvre du procédé selon la revendication 1 ou 2, qui comporte un dispositif (2) d'émission de faisceaux laser (4,5 ) porté par une première table déplaçable pour permettre de faire varier le point de mesure (6a) dans le volume de mesure (6) , un dispositif récepteur (7) comportant au moins un photodétecteur porté par une seconde table déplaçable , des moyens pour déplacer la première table afin de déplacer le point de mesure et des moyens pour déplacer la deuxième table en synchronisme avec la première table, caractérisé par le fait que ces derniers moyens sont constitués par des moyens pour déterminer le taux dudit comptage réduit , des moyens pour assurer le déplacement de la deuxième table suivant la première (11) et la seconde spirale à sections rectilignes successives à angle droit qui s'élargit progressivement , les premier et second pas de déplacement étant constants , le déplacement suivant la première spirale étant réalisé suivant le premier pas ($d_1$) jusqu'à l'obtention d'un taux de comptage réduit différent de zéro, tandis que le déplacement suivant la seconde spirale est réalisé jusqu'à un taux de comptage réduit mesuré qui est supérieur à 50% , ou plus , du taux de comptage réduit maximal déterminé préalablement pour pouvoir permettre des mesures satisfaisantes.

**Patentansprüche**

1.  Automatisierungsverfahren für Laser-Doppler-Geschwindigkeitsmesser nach der Methode der Vorwärtsstrahlung, bestehend aus einer von einer ersten verschiebbaren Platte getragenen Strahlungsvorrichtung für Laserstrahlen, und einer von einer zweiten verschiebbaren Platte getragenen Empfangsvorrichtung mit Lichtdetektor, gekennzeichnet durch: die Anwendung einer sogenannten reduzierten Impulsrate N*, welche definiert ist als der Quotient der Akquisitionsfrequenz N der Informationen, welche aus den Partikeln gewonnen wurden, die ein Meßvolumen durchlaufen und deren Geschwindigkeit validiert wurde, und des Mittelwertes U der während der Messung an einem Punkt aufgezeichneten absoluten Geschwindigkeiten $|U_i|$ der Partikel, definiert durch die Formel

$$U = \frac{1}{m} \sum_{i=1}^{i=m} |U_i| \qquad (1)$$

wobei i ein von 1 bis m laufender Parameter ist; weiterhin darin, zuvor einen theoretischen Wert der maximalen reduzierten Impulsrate zu bestimmen, wenn der Lichtdetektor des Empfangsvorrichtungskopfes korrekt auf den Meßpunkt fokussiert ist; und darin, nacheinander zwei Fokalisierungsphasen oder -frequenzen der Empfangsvorrichtung auf den Meßpunkt durchzuführen, d.h.:

   a) eine partielle automatische Fokalisierungsphase, welche darin besteht, den Lichtdetektor anhand seiner Verschiebungsplatte gemäß einer Spirale mit geradlinigen aufeinanderfolgenden Querschnitten mit rechtem Winkel, der sich vom Ausgangspunkt aus vergrößert, zu verschieben, wobei die aufeinanderfolgenden Verschiebungen des Lichtdetektors gemäß einem ersten konstanten Schritt erfolgen, bis die kalkulierte reduzierte Impulsrate von O abweicht, und

   b) eine abschließende Fokalisierungsphase oder -sequenz, welche auf die vorangegangene Phase folgt und gemäß einer ähnlichen Spirale erfolgt, wobei sich der zweite Schritt jedoch vom ersten darin unterscheidet, daß er einem Bruchstück des Meßvolumendurchmessers entspricht, wobei die Verschiebung des Lichtdetektors anhält, sobald die kalkulierte reduzierte Impulsrate die zuvor bestimmte maximale reduzierte Impulsrate um 50 % oder mehr überschreitet;

2.  Verfahren gemäß Anspruch 1, dadurch gekennzeichnet, daß die abschließende Fokalisierungsphase oder -sequenz beendet wird, wenn die errechnete reduzierte Impulsrate zwischen 70 und 85 % der maximalen reduzierten Impulsrate beträgt.

3.  Vorrichtung für die Anwendung des Verfahrens gemäß Anspruch 1 oder 2, bestehend aus einer Vorrichtung (2) zur Ausstrahlung von Laserstrahlen (4, 5), getragen von einer ersten verschiebbaren Platte, um die Änderung des Meßpunktes (6a) im Meßvolumen (6) zu ermöglichen; einer Empfangsvorrichtung (7) mit mindestens einem Lichtdetektor, getragen von einer zweiten verschiebbaren Platte; Hilfsmitteln zum Verschieben der zweiten Platte synchron mit der ersten Platte, dadurch gekennzeichnet, daß diese letztgenannten Hilfsmittel aus Hilfsmitteln zur Ermittlung der erwähnten reduzierten Impulsrate bestehen; Hilfsmitteln zur Gewährleistung der Verschiebung der zweiten Platte gemäß der ersten (11) und der zweiten Spirale mit aufeinanderfolgenden geradlinigen Querschnitten mit rechtem Winkel, welche sich nach und nach vergrößert, wobei der erste und der zweite Verschiebungsschritt konstant ist und die Verschiebung gemäß der ersten Spirale gemäß dem ersten Schritt ($d_1$) bis zum Erzielen einer von Null abweichenden reduzierten Impulsrate erfolgt, während die Verschiebung gemäß der zweiten Spirale bis zum Erreichen einer gemessenen reduzierten Impulsrate, welche die zuvor ermittelte maximale reduzierte Impulsrate um 50 % oder mehr überschreitet, um somit zufriedenstellende Messungen zu ermöglichen.

**Claims**

1.  A process of automatisation of laser Doppler velocimeters of the forward scattering type comprising a device emitting laser beams supported by a movable table and a receiving device comprising a photodetector supported by another movable table, characterised in that it consists of : using a counting rate N*, which is defined as being the quotient of frequency N of acquisition of the information coming from the particles passing in a measurement volume and whose speed has been validated and of the average U of the absolute speeds $|U_i|$ of the particles recorded during the measurement at a point and which is defined by the formula :

$$U = \frac{1}{m} \sum_{i=1}^{i=m} |U_i| \qquad (1)$$

i being a current parameter of 1 to m ; a previously determined theoretical value of the reduced counting rate when the photodetector of the receiving device head is correctly focused on the measurement point ; and two phases or sequences of focusing of the receiving device at the measurement points to be carried out successively , that is to say :

a) a phase of partial automatic focusing, which consists in moving the photodetector by means of its displacement table according to a spiral with successive rectilinear sections at right angle which is progressively dilated from the starting point, the successive displacements of the photodetector being performed according to a constant pitch until the reduced counting rate calculated is different from 0, and
b) a phase or sequence of final focusing, which follows the preceding phase and which is performed according to an analogous spiral, with another pitch different from the first one and which is equal to a fraction of the diameter of the measurement volume, the photodetector displacement being stopped as soon as the reduced counting rate calculated is 50 %, or more, of the maximum reduced counting rate previously determined ;

2. A process according to claim 1, characterised in that the phase or sequence of final focusing is stopped when the reduced counting rate calculated represents between 70 and 85 % of the maximal reduced counting rate.

3. A device for the implementation of the process according to claim 1 or 2, which comprises

a device 2 for emitting laser beams 4, 5, supported by a movable table to make it possible to vary the point of measurement 6a in the measurement volume 6, a receiving device 7 comprising at least one photodetector supported by another movable table, the means to move the first table in order to advance the point of measurement and the means to move the second table in synchronism with the first table, characterised in that the latter consist of means intended to determine the rate of the said reduced counting, the means to ensure the displacement of the second table following the first spiral 11 and second progressively broadened spiral having successive rectilinear sections at right angles, the first and second pitch of displacement being constant, the displacement following the first spiral being performed according to the first pitch ($d_1$) until a reduced counting rate is obtained different from zero, while the displacement following the second spiral is performed up to a reduced counting rate measured 50 % or higher than the maximum reduced counting rate previously determined to allow satisfactory measurements.

FIG.1

FIG.2

FIG.3

FIG.4